Europäisches Patentamt

European Patent Office

Office européen des brevets

(11) Numéro de publication: **0 251 845 B1**

# FASCICULE DE BREVET EUROPEEN

(45) Date de publication de fascicule du brevet:
15.05.91

(51) Int. Cl.⁵: **B60G  21/04**

(21) Numéro de dépôt: 87401266.9

(22) Date de dépôt: 04.06.87

(54) **Dispositif de maintien transversal de la barre anti-devers d'une suspension de véhicule automobile.**

(30) Priorité: 27.06.86 FR 8609333

(43) Date de publication de la demande:
07.01.88 Bulletin  88/01

(45) Mention de la délivrance du brevet:
15.05.91 Bulletin  91/20

(84) Etats contractants désignés:
DE GB IT

(56) Documents cités:
EP-A- 0 093 625        DE-C- 954 031
DE-U- 8 012 412        FR-A- 2 111 352
FR-A- 2 480 683        FR-A- 2 517 259
FR-A- 2 564 043        GB-A- 2 010 759
US-A- 2 213 004        US-A- 4 192 529

PATENTS ABSTRACTS OF JAPAN, vol. 7, no.
246 (M-253)[1391], 2 novembre 1983, & JP-
A-58 133 909 (NIHON HATSUJIYOU K.K.)
09-08-1983

(73) Titulaire: **AUTOMOBILES PEUGEOT, Société
dite:**
**75, Avenue de la Grande-Armée
F-75761 Paris Cedex 16(FR)**

Titulaire: **AUTOMOBILES CITROEN
62 Boulevard Victor-Hugo
F-92200 Neuilly-sur-Seine(FR)**

(72) Inventeur: **Ameline, Claude Michel
8, Rue des Accacias
F-91430 Igny(FR)**

(74) Mandataire: **Fabien, Henri et al
PEUGEOT SA. DAT / BPI 18, rue des Fauvelles
F-92250 La Garenne-Colombes(FR)**

## Description

L'invention concerne une suspension de véhicule automobile à roues indépendantes comprenant une barre anti-dévers.

Dans une suspension de ce type la barre anti-dévers est reliée à la caisse par deux paliers du type à glissement interne ou du type articulation élastomère avec armature métallique.

Dans les virages, la barre est soumise à un effort transversal et en cas de déplacement les fonctions de cette barre sont perturbées.
Pour éviter cet inconvénient, plusieurs systèmes ont été proposés:

- barre avec paliers dont les axes des paliers forment un angle entre eux. Cette solution entraîne des rigidités parasites et n'offre pas de maintien positif
- dispositif avec butées maintenues sur la barre par colliers. Cette solution est satisfaisante techniquement, mais majore le coût de la suspension
- déformation sphérique ou biconique de la barre conjuguée avec un palier à glissement interne lubrifié (brevet français FR-A-2 480683. Cette solution satisfait la fonction, mais le type de palier (glissement interne) nécessite une forme de révolution et d'état de surface correct. La forme est obtenue par refoulement et avec éventuellement reprise en usinage d'où un coût de fabrication non négligeable. D'autre part les paliers droit et gauche sont différents.

L'invention a pour but de remédier aux inconvénients précités.

Le dispositif de maintien transversal de la barre anti-dévers selon l'invention est du type dans lequel ladite barre comprend une partie centrale transversale reliée à la caisse par deux paliers coaxiaux au droit d'un desquels la barre comporte une déformation coopérant avec une bague élastique de ce palier. Il se caractérise en ce que cette déformation est obtenue par un écrasement local de la barre dont la longueur, mesurée selon l'axe de la barre, est inférieure à la largeur de la bague élastique, la section de la barr étant sensiblement elliptique au droit de l'écrasement.

Selon une autre caractéristique de l'invention la bague élastique est fendue selon une génératrice pour en faciliter le montage.

Enfin la portée extérieure de la bague élastique comporte des moyens d'arrêts transversaux, ces moyens constitués de préférence par une saillie trapézoïdale se développant selon un demi-diamètre et s'emboîtant dans une dépression conjuguée du boîtier ou du couvercle du palier.

Le description qui suit d'un exemple de réalisation de l'invention se réfère aux dessins annexés dans lesquels :
- la figure 1 est une vue en perspective d'un dispositif anti-dévers avant
- la figure 2 est une coupe axiale d'un palier de la barre anti-dévers
- la figure 3 est une coupe perpendiculaire à l'axe de la barre anti-dévers au droit de la déformation du palier.

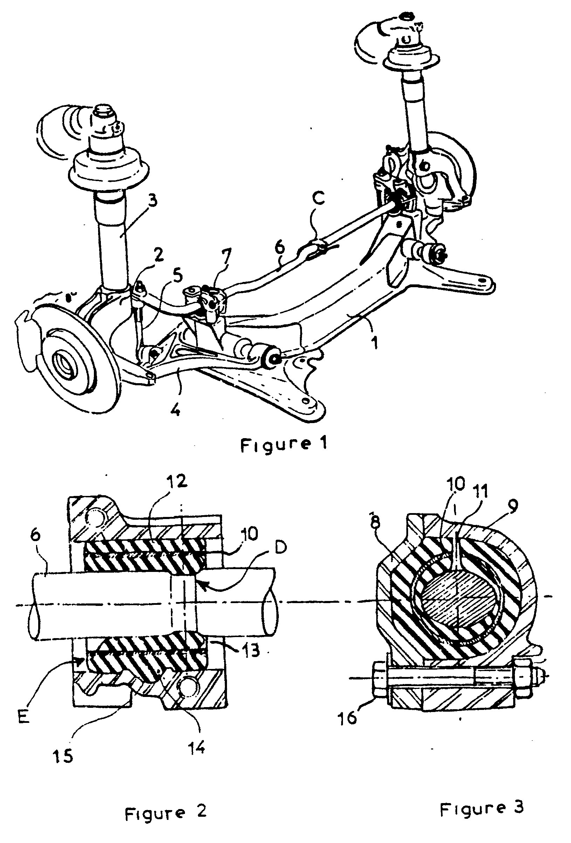

Le dispositif anti-dévers de la figure 1 est appliqué à une suspension avant hydropneumatique du genre "Mac Pherson" comportant une traverse inférieure ou berceau 1 lié à la caisse du véhicule.

Chaque pivot de fusée 2 est solidaire d'un vérin hydropneumatique 3 en appui (non représenté) sur la caisse du véhicule à sa partie supérieure. Chaque pivot 2 est relié, à sa partie inférieure, à la traverse 1 par des bras transversaux 4. Chaque bras de suspension 4 est relié par une biellette 5 sensiblement verticale à une extrémité de la barre anti-dévers 6, lui transmettant ainsi les efforts et déplacements des bras de suspension.

La barre anti-dévers est utilisée également pour la prise de l'information hauteur véhicule en son point milieu C pour commander un correcteur de hauteur non représenté.

Les efforts transmis à la barre 6 par les biellettes 5 ont une composante parallèle à l'axe d'articulation de la barre, il est donc nécessaire d'avoir un maintien transversal de cet organe, maintien réalisé par une déformation elliptique D obtenue par écrasement localisé de la barre 6 au niveau de l'un des paliers 7. Chaque palier 7 se compose d'une bague élastique E disposée entre la barre 6 et une enveloppe extérieure. Cette enveloppe peut être réalisée de différentes façons. Elle est constituée de préférence par un boîtier 8 et un couvercle 9 en alliage léger. Le boîtier 8 et le couvercle 9 sont assemblés par des boulons 16, l'un de ces boulons assurant en outre la fixation du palier 7 sur le berceau 1. La bague élastique E se compose d'une armature en acier 10 recouverte par adhérisation d'élastomère formant une couche extérieure 12 et une couche intérieure 13. Pour faciliter le montage, la bague élastique est ouverte selon une génératrice 11. A l'état libre la section de la bague a un diamètre supérieur à celui de la section du volume intérieur de l'enveloppe, cette différence de diamètre procurant lors de l'assemblage du boîtier 8 et du couvercle 9 la compression des couches 12 et 13 d'élastomère. Cette compression amène la couche intérieure 13 à épouser la forme de la barre et assure une liaison axiale entre la barre 6 et l'armature 10. La compression de la couche d'élastomère extérieure 12 qui permet la rotation de la barre 6 procure une meilleure tenue en fatigue de l'articulation. La couche d'élastomère extérieure 12 est munie sur sa face en contact avec le couvercle 9 d'une saillie trapézoïdale 14 se développant selon un demi-diamètre. Cette saillie s'emboîte dans une dépression 15 de même forme réalisée dans le couvercle 9 du boîtier 8. La coopération de la saillie 14 de la couche 12 et de la dépression 15 du couvercle 9 assure une liaison axiale entre l'articulation et la traverse 1.

De préférence l'écrasement localisé de la barre lui donne au droit du palier une section sensiblement elliptique dont le grand axe est orienté de façon à ne pas altérer le taux de travail de la barre de façon sensible. Dans le cas de la figure 1 le grand axe de l'ellipse est vertical.

Pour plus d'efficacité, on peut donner à l'élastomère par moulage une forme conjuguée de celle de la barre.

Dans tous les cas la rotation de la barre est permise par la déformation de l'élastomère. Le palier fonctionne donc sans adjonction de graisse ou autre lubrifiant. Enfin l'opération de déformation de la barre est d'un coût très minime.

## Revendications

1. Dispositif de maintien transversal de la barre anti-devers d'une suspension de véhicule automobile, ladite barre 6 comprenant une partie centrale transversale reliée à la caisse par deux paliers coaxiaux 7 au droit desquels la barre 6 comporte une déformation D coopérant avec une bague élastique E de ce palier, caractérisé en ce que la déformation D est obtenue par un écrasement local de la barre 6 dont la longueur, mesurée selon l'axe de la barre, est inférieure à la largeur de la bague élastique E, la section de la barre étant sensiblement elliptique au droit de l'écrasement.

2. Dispositif selon la revendication 1, caractérisé en ce que le grand axe de la section elliptique est orienté de façon à ne pas altérer le taux de travail de la barre.

3. Dispositif selon l'une quelconque des revendications précédentes caractérisé en ce que la bague élastique E est fendue selon une génératrice 11.

4. Dispositif selon l'une quelconque des revendications précédentes caractérisé en ce que l'élastomère de la couche intérieure 13 de la bague E reçoit par moulage une forme conjuguée de celle de la barre 6.

5. Dispositif selon l'une quelconque des revendications précédentes caractérisé en ce que la portée extérieure 12 de la bague élastique E comporte des moyens d'arrêts transversaux 14, 15.

6. Dispositif selon la revendication 5, caractérisé en ce que les moyens d'arrêts transversaux sont constitués d'une saillie trapézoïdale 14 se développant suivant un demi-diamètre et s'emboîtant dans une dépression conjuguée 15 du boîtier 8 ou du couvercle 9 du palier 7.

## Claims

1. A device for transverse retention of the anti-roll bar of a motor vehicle suspension, the said bar 6 comprising a central transverse section coupled to the body via two coaxial bearings 7 abreast of which the bar 6 has a deformation D co-operating with an elastic ring E of this bearing, characterised in that the deformation D is obtained by means of localised flattening of the bar 6, of which the length, measured along the axis of the bar, is smaller than the width of the elastic ring E, the cross-section of the bar abreast of the said flattening being substantially elliptical.

2. A device according to claim 1, characterised in that the major axis of the elliptical cross-section is so directed that it does not alter the degree to which the bar operates.

3. A device according to either of the preceding claims, characterised in that the elastic ring E is split along a generatrix 11.

4. A device according to any one of the preceding claims, characterised in that the elastomer of the inner layer 13 of the ring E is endowed by moulding with a shape matching that of the bar 6.

5. A device according to any one of the preceding claims characterised in that the outer bearing part 12 of the elastic ring E comprises transverse retention means 14,15.

6. A device according to claim 5, characterised in that the transverse retention means comprise a trapezoidal projection 14 formed along a half-diameter and engaging in a mating recess 15 of the casing 8 or of the cover 9 of the bearing 7.

## Ansprüche

1. Vorrichtung zum Querstabilisieren der Querstabilisierungsstange einer Fahrzeugaufhängung, wobei die Stange (6) einen mittigen Querbereich aufweist, der mit dem Gehäuse durch zwei koaxiale Lager (7) verbunden ist, innerhalb derer die Stange (6) eine Deformation D aufweist, die mit einem elastischen Ring E des Lagers zusammenmwirkt, **dadurch gekennzeichnet,** daß die Deformation D durch eine lokale Quetschung der Stange (6) erreicht wird, deren Länge, gemessen entlang der Stangenachse, geringer ist als die Breite des elastischen Rings E, wobei der Querschnitt der Stange im wesentlichen elliptisch im Bereich der Quetschung ist.

2. Vorrichtung nach Anspruch 1, **dadurch gekennzeichnet,** daß die große Achse des elliptischen Querschnitts derart ausgerichtet ist, daß sie das Arbeitsmaß der Stange nicht ändert.

3. Vorrichtung nach einem der vorhergehenden Ansprüche, **dadurch gekennzeichnet,** daß der elastische Ring (E) entlang einer Mantellinie (11) geschlitzt ist.

4. Vorrichtung nach einem der vorhergehenden Ansprüche, **dadurch gekennzeichnet,** daß der Elastomer der Innenschicht (13) des Rings (E) durch Gießen eine Form erhält, die mit jener der Stange (6) gekoppelt ist.

5. Vorrichtung nach einem der vorhergehenden Ansprüche, **dadurch gekennzeichnet,** daß die äußere Stütze (12) des elastischen Rings (E) Querarretierungseinrichtungen (14,15) aufweist.

6. Vorrichtung nach Anspruch 5, **dadurch gekennzeichnet,** daß die Querarretierungseinrichtungen aus einem trapezförmigen Vorsprung (14) gebildet sind, der gemäß einem Halbdurchmesser verläuft und in eine dazugehörige bzw. gekoppelte Vertiefung (15) des Gehäuses (8) oder des Deckels (9) des Lagers (7) eingreift.

Figure 1

Figure 2

Figure 3